# EUROPÄISCHE PATENTANMELDUNG

(11) **EP 0 988 888 A1**
(43) Veröffentlichungstag der Anmeldung: **29.03.2000**
(21) Anmeldenummer: 99118023.3
(22) Anmeldetag: 21.09.1999
(51) Int. Cl.: B01F 7/16, G01K 13/08

(54) **Verfahren und Vorrichtung zur Parametermessung in Reaktoren mit rotierenden Rührern**

(30) Priorität: 24.09.1998 DE 19843689
(71) Anmelder: BASF AKTIENGESELLSCHAFT, 67056 Ludwigshafen (DE)
(72) Erfinder: Volkmer, Dieter, 67105 Schifferstadt (DE); Schey, Peter, 67071 Ludwigshafen (DE); Plötz, Herbert, 67105 Schifferstadt (DE); Langhauser, Franz, Dr., 67152 Ruppertsberg (DE); Meckelnburg, Dirk, 67059 Ludwigshafen (DE); Klein, Hans-Josef, 66646 Marpingen (DE); Bergner, Michael, 67251 Freinsheim (DE); Oelze, Jürgen, 67071 Ludwigshafen (DE)
(74) Vertreter: Isenbruck, Günter, Dr.

(57) **Zusammenfassung**

Verfahren zur Parametermessung bei Reaktoren mit beweglichen Rührern, welche im Inneren Sonden enthalten, wobei auf der Oberfläche der beweglichen Rührer mindestens zwei Sonden angebracht werden, welche durch Anschlußkabel, die sich im beweglichen Rührer befinden, über einen Multiplexer mit einem Sensorsignalverstärker verbunden sind, wobei die an den Sonden erhaltenen Meßdaten über die Anschlußkabel an einen Sensorsignalverstärker geleitet werden, von wo aus die Meßdaten durch berührungslose, induktive Signalübertragung mittels eines kontaktlosen Sensorabgriffs an ein elektronisches Auswertegerät weitergegeben werden.

## Beschreibung

Die vorliegende Erfindung betrifft ein Verfahren zur Parametermessung bei Reaktoren mit beweglichen Rührern, welche im Inneren Sonden enthalten, welches dadurch gekennzeichnet ist, daß auf der Oberfläche der beweglichen Rührer mindestens zwei Sonden angebracht werden, welche durch Anschlußkabel, die sich im beweglichen Rührer befinden, mit einem Sensorsignalverstärker verbunden sind, wobei die an den Sonden erhaltenen Meßdaten über die Anschlußkabel an einen Sensorsignalverstärker geleitet werden, von wo aus die Meßdaten durch berührungslose, induktive Signalübertragung mittels eines kontaktlosen Sensorabgriffs an ein elektronisches Auswertegerät weitergegeben werden.

Weiterhin betrifft die vorliegende Erfindung eine Vorrichtung zur Parametermessung bei Reaktoren mit beweglichen Rührern.

Zur Reaktionsführung und Reaktionskontrolle werden in chemischen Reaktoren an den unterschiedlichsten Stellen häufig Temperatursonden angebracht, gelegentlich auch Drucksonden. Dies ist insbesondere bei Polymerisationsreaktoren notwendig, da dort die durch die Polymerisation erzeugte Reaktionswärme rasch wieder abgeführt werden muß, wodurch es notwendig ist, den Druck- bzw. Temperaturverlauf im Polymerisationsreaktor möglichst genau zu bestimmen. Bei den verwendeten Temperatursonden handelt es sich üblicherweise um Thermoelemente, welche durch die Reaktorwand oder über ein Tauchrohr in das Innere des Reaktors geführt werden.

Bei zahlreichen Polymerisationsreaktoren verwendet man häufig bewegliche Rührer im Reaktorinneren, die das oftmals pulverförmige Reaktionsbett in Bewegung halten. Für solche Zwecke sind u.a. vertikal angeordnete, frei tragende Wendelrührer besonders gut geeignet, die u.a. aus der EP-B 000 512, der EP-B 031 417 oder der EP-B 038 478 bekannt sind. Die frei tragenden Wendelrührer fördern dabei das in den Reaktoren vorhandene Pulverbett nach oben.

Bei Reaktoren, die im Inneren Rührer aufweisen, stellt sich häufig das Problem, daß im eigentlichen Arbeitsbereich des Rührers, d.h. an der Stelle im Inneren, an der die stärkste Durchmischung des Reaktorinhalts erfolgt und der wesentliche Energieeintrag durch den Rührer stattfindet, bislang keine Druck- oder Temperatursonden eingebaut werden konnten, weil durch die Bewegung des Rührers dies verhindert wird. Aus diesem Grunde werden bislang die Druck- oder Temperatursonden entweder nur an der Reaktorwand befestigt oder aber durch Einführung eines Tauchrohres nur im Inneren des Rührers eingebracht. Durch Installation beispielsweise mehrerer Sonden an unterschiedlichen Stellen des Reaktors lassen sich Temperatur- oder Druckverteilungen im Reaktorinneren ermitteln, wobei diese aber meist keine verläßlichen Informationen über die Parameterverteilung im eigentlichen Arbeitsbereich des Rührers ermöglichen, da dort keine entsprechenden Sonden vorhanden sind.

Auch bei den in der EP-B 000 512, der EP-B 031 417 oder der EP-B 038 478 beschriebenen Reaktoren ist es bisher nicht möglich gewesen, Druck- oder Temperaturverteilungen im eigentlichen Arbeitsbereich des freitragenden Wendelrührers zu bestimmen, da dort übliche Sonden wegen der speziellen Geometrie des freitragenden Wendelrührers nicht angebracht werden können. In derartigen Reaktoren erfolgt die Druck- oder Temperaturmessung durch übliche Sonden, die an der Reaktorwand oder aber im freien Inneren des Wendelrührers innerhalb von darin eingelassenen Tauchrohren installiert sind. Die dabei erhaltenen Druck- oder Temperaturverteilungen ergeben aber kein zuverlässiges Bild über die im eigentlichen Arbeitsbereich des freitragenden Wendelrührers vorherrschenden Druck-, bzw. Temperaturbedingungen, also zwischen dem Wandbereich des Reaktors einerseits und dem freien, mit Tauchrohren versehenen, Inneren des Wendelrührers andererseits.

Der vorliegenden Erfindung lag daher die Aufgabe zugrunde, den dargestellten Nachteilen abzuhelfen und ein möglichst wenig aufwendiges Verfahren zur Parametermessung bei Reaktoren mit beweglichen Rührern zu entwickeln, welches die Bestimmung von Druck- oder Temperaturverteilungen auch im Arbeitsbereich des beweglichen Rührers ermöglicht, also an der Stelle im Inneren des Reaktors, an der die stärkste Durchmischung des Reaktorinhalts erfolgt und der stärkste Energieeintrag durch den Rührer stattfindet. Weiterhin erstreckte sich die der vorliegenden Erfindung zugrundeliegende Aufgabe auch auf die Entwicklung einer für derartige Parametermessungen geeigneten Vorrichtung.

Demgemäß wurde ein neues Verfahren zur Parametermessung bei Reaktoren mit beweglichen Rührern entwickelt, welche im Inneren Sonden enthalten, das dadurch gekennzeichnet ist, daß auf der Oberfläche der beweglichen Rührer mindestens zwei Sonden angebracht werden, welche durch Anschlußkabel, die sich im beweglichen Rührer befinden, mit einen Sensorsignalverstärker verbunden sind, wobei die an den Sonden erhaltenen Meßdaten über die Anschlußkabel an einen Sensorsignalverstärker geleitet werden, von wo aus die Meßdaten durch berührungslose, induktive Signalübertragung mittels eines kontaktlosen Sensorabgriffs an ein elektronisches Auswertegerät weitergegeben wird.

Das erfindungsgemäße Verfahren eignet sich zur Parametermessung bei Reaktoren mit beweglichen Rührern, welche im Inneren Sonden enthalten. Derartige Reaktoren sind die in der chemischen Technik üblicherweise verwendeten, bewegliche Rührer enthaltenden, Reaktoren, wobei sich das erfindungsgemäße Verfahren insbesondere für Polymerisationsreaktoren gut anwenden läßt.

Unter der Bezeichnung bewegliche Rührer sollen vor allem Scheibenrührer, Blattrührer, ferner Ankerrührer, symmetrische und assymmetrische Impellerrührer sowie freitragende Wendelrührer verstanden werden, welche bei Polymerisationsreaktionen bevorzugt verwendet werden.

Derartige Wendelrührer sind u.a. aus der EP-B 000 512 bekannt und bestehen aus einer in der Mitte des unteren Teils des Reaktors angebrachten Nabe, auf der der spiralförmig sich nach oben schraubende Wendelrührer aufgebracht ist. Der Wendelrührer besteht üblicherweise aus Stahl und enthält im Zentrum, also oberhalb der Nabe keine Achse, ist also freitragend. Der freitragende Wendelrührer beschreibt etwa 4 bis 10, insbesondere etwa 4 bis 6 Windungen, bis er den oberen Bereich des Reaktors erreicht.

Gemäß dem erfindungsgemäßen Verfahren werden auf der Oberfläche der beweglichen Rührer mindestens zwei, vorzugsweise mindestens 9 und insbesondere mindestens 12 Sonden angebracht. Bevorzugte Sonden sind u.a. Platinwiderstandsthermometer und Thermoelemente aufgrund deren möglichst massearmen Bauweise.

Im erfindungsgemäßen Verfahren werden insbesondere Platinwiderstandsthermometer wegen ihrer hohen Meßgenauigkeit eingesetzt. Neben Temperatursonden können vor allem Drucksonden verwendet werden.

Nach einer bevorzugten Ausgestaltung des erfindungsgemäßen Verfahrens werden die Sonden, also die Druck- oder die Temperatursonden, an der Oberseite des Rührerprofils oberflächenbündig eingebaut. Um ausschließlich die im Reaktorraum vorherrschenden Parameter zu messen, ist es vorteilhaft, die Sonden gegenüber der gut wärmeleitenden Rührerwendel thermisch dadurch zu isolieren, daß man diese in Kunststoffbüchsen einbettet, wobei der verwendete Kunststoff weniger als 1% der Wärmeleitfähigkeit des die Rührerwendels bildenden Stahls aufweist. Dafür gut geeignete Kunststoffe sind u.a. Polyetheretherketon, Polytetrafluorethylen oder Polyvinylidenfluorid, wobei Polyetheretherketon aufgrund seiner Materialeigenschaften, insbesondere wegen seiner hohen mechanischen, elektrischen und chemischen Beständigkeit bevorzugt wird. Besonders gut geeignete Polyetheretherketone sind u.a. Polyaryletherketone, welche durch nukleophile Substitution aus Hydrochinon und 4,4'-Difluorbenzophenon erhältlich sind.

Die nach dem erfindungsgemäßen Verfahren verwendeten Druck- oder Temperatursonden werden vom jeweiligen Einbauort über übliche Anschlußkabel, welche sich im beweglichen Rührer befinden, mit einem Sensorsignalverstärker verbunden. Sensorsignalverstärker sind elektronische Bausteine, welche die Meßwerte unterschiedlichster Sensoren in ein hochfrequentes Signal umformen, welches dann durch berührungslose, induktive Übertragung an eine entsprechende Auswerteeinheit weitergegeben wird. Die von den Sensoren erhaltenen Meßwerte können sich dabei auf den Druck, die Temperatur, das Drehmoment, den Weg oder die Kraft beziehen.

Es kann sich empfehlen, zwischen den Druck- oder Temperatursonden einerseits und dem Sensorsignalverstärker andererseits noch einen sogenannten Multiplexer zu schalten, d.h. einen Signalverstärker. Ein Multiplexer hat dabei u.a. die Aufgabe, angeschlossene Sensoren auf ihre Meßwerte hin abzufragen und dann die jeweiligen Meßwerte an den Sensorsignalverstärker weiterzuleiten.

Die nach dem erfindungsgemäßen Verfahren an den Druck- oder Temperatursonden erhaltenen Meßdaten, die über Anschlußkabel an einem Sensorsignalverstärker geleitet werden, werden von dort aus durch berührungslose, induktive Signalübertragung mittels eines kontaktlosen Sensorabgriffs an ein elektronisches Auswertegerät weitergegeben.

Unter einem kontaktlosen Sensorabgriff versteht man den berührungslosen Zugriff auf die Meßdaten des Sensors, ohne galvanische oder mechanische Verbindung zum Sensor, beispielsweise über entsprechende Schleifringe.

Beispiele für geeignete Auswertegeräte sind u.a. Ein- oder Mehrkanalempfänger für entsprechende Prozeßparameter wie Druck oder Temperatur.

Bei Reaktoren mit freitragenden Wendelrührern kann es sich auch empfehlen, daß erfindungsgemäße Verfahren in der Weise auszugestalten, daß die in den Sensorsignalverstärker eintreffenden Meßdaten über ein Koaxialkabel an eine gekapselte Rotorantenne gesendet werden, von wo sie dann durch berührungslose, induktive Signalübertragung auf eine gekapselte Statorantenne übertragen werden, die sich in einem zentralen Tauchrohr im Zentrum des freitragenden Wendelrührers befindet und wobei die Meßdaten anschließend von der gekapselten Statorantenne über ein weiteres Koaxialkabel an das elektronische Auswertegerät weitergeleitet werden.

Ein Koaxialkabel enthält in der Mitte ein Kabel, welches von einer geeigneten Isolierung ummantelt ist. Die Isolierung wiederum ist von einer zylindrischen Abschirmung aus leitfähigem Gewebe umgeben. Die zylindrische Abschirmung ist ebenfalls in eine weitere Isolierung eingebettet, welches die Außenhülle des Koaxialkabels darstellt.

Bei einer gekapselten Rotorantenne handelt es sich um eine Metallschleife, an deren offenen Enden neben Abschlußkondensatoren noch Koaxialkabel angelötet sind. Die Metallschleife, die Kondensatoren und die Koaxialkabel liegen dabei im entsprechend geformten Antennenträger und sind in einer geeigneten Vergußmasse eingebettet.

Ebenso wie die Rotorantennen können auch die Statorantennen entsprechend gekapselt sein, d.h. in einer geeigneten Vergußmasse eingebettet sein.

Unter einer berührungslosen induktiven Signalübertragung versteht man die Übertragung von Meßsignalen aus einem Anlagenteil in ein anderen, wobei eines der beiden Anlageteile oder auch beide beweglich sein können. Die Bewegung kann sowohl eine symmetrische als auch eine assymmetrische Drehbewegung sein. In jedem Fall erfolgt die Übertragung der Meßsignale nicht über mechanische oder über elektromechanische Kopplung, sondern über zwei induktiv gekoppelte Schleifen (Antennen). Die Kopplung erfolgt nach dem Prinzip eines in diesem Fall eisenlosen Transformators. Ein hochfrequentes elektromagnetisches Feld überträgt elektrische Energie von einer Empfangsantenne in eine Sendeantenne. Damit wird der Sensorsignalverstärker gespeist und ist dadurch in der Lage, die Meßdaten des Sensors über die Sendeantenne in die Empfangsantenne zu übertragen.

Weiterhin kann es sich empfehlen, die zur Druck- oder Temperaturmessung benötigte Spannungsversorgung über die gekapselten Rotor- und Stabsantennen ebenfalls induktiv vorzunehmen.

Das erfindungsgemäße Verfahren ist vor allem für solche Reaktoren geeignet, die bei einem Druckbereich von 0 bis 100 bar und bei einer Temperaturbereich von -40 bis +150°C betrieben werden.

Falls es sich bei den Reaktoren um Polymerisationsreaktoren handelt, sind solche Reaktoren bevorzugt, die bei einem Druckbereich von 10 bis 50 bar, insbesondere von 12 bis 40 bar und bei einem Temperaturbereich von -40 bis +150°C, bevorzugt von -40 bis +125°C, insbesondere von -25 bis +100°C arbeiten.

Die ebenfalls erfindungsgemäße Vorrichtung zur Bestimmung von Parametern bei Reaktoren mit beweglichen Rührern enthält im Reaktorinnern Sonden, wobei an der Oberfläche der beweglichen Rührer mindestens zwei Sonden angebracht sind, welche durch Anschlußkabel, die sich im beweglichen Rührer befinden, mit einem Sensorsignalverstärker verbunden sind, welcher wiederum über einen kontaktlosen Sensorabgriffmit einem elektronischen Auswertegerät zusammengeschaltet ist.

Als Sonden können dabei sowohl Temperatur- als auch Drucksonden an der Oberfläche des beweglichen Rührers angebracht werden. In bezug auf die einzelnen Ausgestaltungen der ebenfalls erfindungsgemäßen Vorrichtung sei auf die Beschreibung des erfindungsgemäßen Verfahrens verwiesen.

Das erfindungsgemäße Verfahren eignet sich zur Parametermessung, d.h. zur Druck und Temperaturmessung bei Reaktoren mit beweglichen Rührern insbesondere im deren Arbeitsbereich, der bislang derartigen Messungen nur unzureichend zugänglich war. Das erfindungsgemäße Verfahren ist ebenso wie die erfindungsgemäße Vorrichtung wenig aufwendig und ermöglicht präzise Parameterbestimmungen, auch in explosionsgefährdeten Bereichen.

Eine beispielhafte Ausführungsform des erfindungsgemäßen Verfahrens an Hand eines freitragenden Wendelrührers ist in den nachfolgenden Zeichnungen - Figur 1 bis 3 - schematisch dargestellt und im folgenden näher erläutert.

Es zeigt,
Figur 1 eine Temperatursonde im Wendelprofil eines freitragenden Wendelrührers,
Figur 2 einen in einem Rührreaktor eingebauten Wendelrührer mit einer erfindungsgemäßen Vorrichtung zur Temperaturmessung und
Figur 3 den unteren Teil des Wendelrührers mit Rührernabe vom Wendelrührer und kontaktlosem Sensorabgriff.

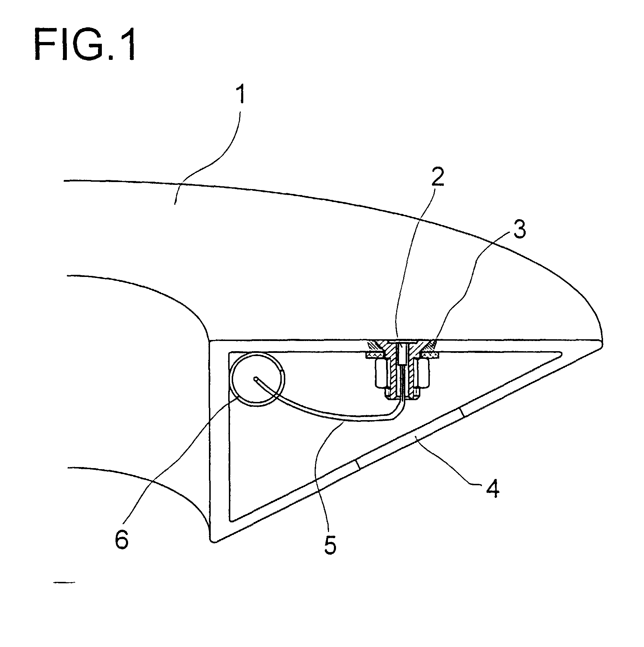

### Beschreibung Figur 1:

Figur 1 zeigt eine Temperatursonde im Wendelrührerprofil (1). In diesem befindet sich an der Oberfläche eine Temperatursonde (2), die in eine Kunststoffbüchse (3) zur Isolierung eingebettet ist. Am unteren Rand des Wendelrührerprofils (1) ist ferner noch eine Montageöffnung (4) zur Montage der Temperatursonde (2) angebracht. Über ein Führungsrohr (6) führen Meßleitungen (5) vom Sensorverstärker zur Temperatursonde (2). Bei der Temperatursonde (2) handelt es sich um ein Platinwiderstandsthermometer vom Typ Pt 100 in der Ausführung eines Gleitlagerthermometers, eingebaut in einer speziell gefertigten metallischen Senkkopfschraube (Rechtsschraffur). Diese Schraube wiederum sitzt thermisch isoliert in einem konischen, in der Senkung angepassten, Kunststoffring (Linksschraffur) in einem Senkloch in der produktführenden Oberfläche des Wendelrührerprofiles (1). Die gesamte Anordnung ist oberflächenbündig. Sie wird durch eine Öffnung in der Unterseite des Profiles, durch eine Kunststoffunterlegscheibe thermisch isoliert, mit einer Mutter befestigt. Der ausgewählte Kunststoff ist Polyetheretherketon, ein Material mit für diesen Einsatzbereich positiven Eigenschaften. Dieser Sondenaufbau garantiert, daß nicht die Rührer-, sondern ausschließlich die Produkttemperatur gemessen wird.

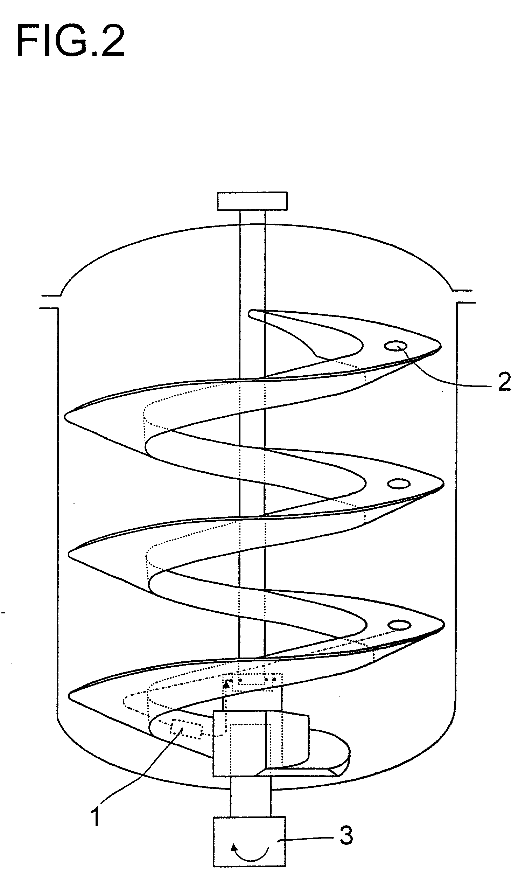

### Beschreibung Figur 2:

Figur 2 stellt den gesamten Reaktor dar, in welchem sich der Wendelrührer mit der Temperaturvorrichtung befindet. Der Wendelrührer wird durch ein unterhalb angeordnetes Rührwerk (3) in Bewegung gehalten. Am Wendelrührer sind Temperatursonden (2) und Sensorverstärker (1) angebracht. Von den Temperatursonden (2) zweigen Leitungsführungen zur Signalübertragungselektronik ab, hier mit Sensorverstärker bezeichnet. Diese Elektronik beinhaltet als Eingangsstufe einen Multiplexer, der die Aufgabe hat, alle angeschlossenen Sensoren der Reihe nach auf den Wert der Meßgröße abzufragen und den jeweiligen Wert an den Sensorsignalverstärker weiterzuleiten. Die durch diesen Verstärker aufbereiteten Meßwerte werden über ein Koaxialkabel der Rotorantenne zugeführt, auf die Statorantenne übertragen und wiederum über ein Koaxialkabel an das Auswertegerät weitergeleitet.

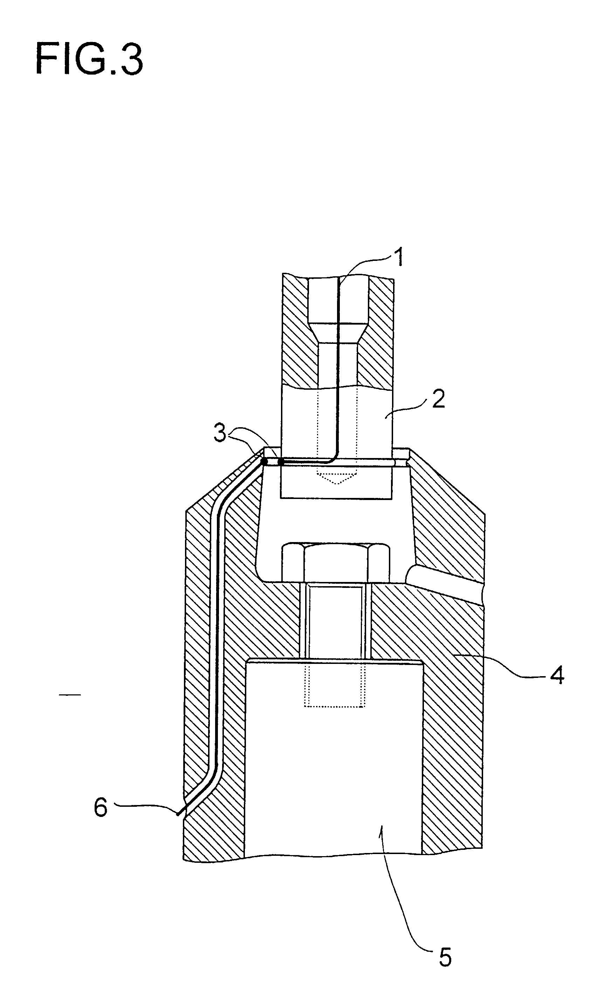

### Beschreibung Figur 3:

Aus der Figur 3 läßt sich der untere Teil des Wendelrührers mit Rührernabe vom Wendelrührer (4) und kontaklosem Sensorabgriff erkennen. Oben befindet sich das zur Auswerteelektronik führende Datenübertragungskabel (1), eingebettet in ein freistehendes Rohr in der Reaktormitte (2). Das Datenübertragungskabel ist mit Antennen (3) verbunden. Weiterhin enthält Figur 3 Datenübertragungskabel (6), die zum Sensorverstärker führen und eine Rührwelle vom unteren Reaktorantrieb (5). Figur 3 zeigt das Aufbauprinzip der berührungslosen, induktiven Signalübertragung. Die beiden Antennen in der Rührernabe (Rotor) bzw. im Zentralrohr (Stator) sind konzentrisch auf einer Ebene angeordnet. Der Antennenträger auf der Nabe ist konisch nach unten erweitert, so daß zwischen Stator und Rotor eindringendes Produkt nicht festgerieben wird, sondern durch seitliche Öffnungen wieder in den Produktkreislauf gelangt. Beide Antennenträger sind, ebenso wie die Sensorfassungen aus Polyetheretherketon gefertigt.

An der Rührerwendel sind mehrere Temperaturmeßstellen angebracht (Figur 2). Der Meßgenauigkeit wegen werden Pt 100 (Platinwiderstandsthermometer) verwendet. Diese Pt 100 sind an der Oberseite des Rührerprofils (Figur 1) oberflächenbündig eingebaut. Um ausschließlich die Produkttemperatur zu messen, werden die Pt 100 gegenüber dem gut wärmeleitenden Rührerwendel thermisch isoliert, indem sie in Kunststoffbüchsen mit einem Wärmeleitwert von weniger als 1 % von dem des Rührerwendelstahles befestigt werden. Vom jeweiligen Einbauort ab werden die Anschlußkabel der Pt 100 in ein Führungsrohr eingezogen (Figur 1), das bis zum unteren Ende des Rührerwendels reicht. Dort befindet sich - innerhalb des Rührerwendelprofiles - ein geschlossenes Gehäuse, in welchem die Rotorelektronik untergebracht ist. Diese setzt sich zusammen aus einem Multiplexer, dem die Pt 100 zugeführt werden, und dem Sensorsignalverstärker. Der Ausgang des Verstärkers ist über ein Koaxialkabel mit der Rotorantenne verbunden, die in einem auf der Rührernabe befestigten Kunststoffteil liegt. Von hier aus werden die Daten in die Statorantenne übertragen. Diese liegt konzentrisch zur Rotorantenne und auf deren Ebene, ebenfalls eingebettet in ein Kunststoffteil, das am unteren Ende des zentralen Tauchrohres angebracht ist (Figur 3). Die Statorantenne ist über ein Koaxialkabel mit der Auswerteeinheit verbunden, wo die Daten zu Einheitssignalen aufbereitet werden.

## Patentansprüche

1. Verfahren zur Parametermessung bei Reaktoren mit beweglichen Rührern, welche im Reaktorinneren Sonden enthalten, dadurch gekennzeichnet, daß auf der Oberfläche der beweglichen Rührer mindestens zwei Sonden angebracht werden, welche durch Anschlußkabel, die sich im beweglichen Rührer befinden, mit einem Sensorsignalverstärker verbunden sind, wobei die an den Sonden erhaltenen Meßdaten über die Anschlußkabel an einen Sensorsignalverstärker geleitet werden, von wo aus die Meßdaten durch berührungslose, induktive Signalübertragung mittels eines kontaktlosen Sensorabgriffs an ein elektronisches Auswertegerät weitergegeben werden.

2. Verfahren nach Anspruch 1, dadurch gekennzeichnet, daß als Sonden Drucksonden verwendet werden.

3. Verfahren nach Anspruch 1, dadurch gekennzeichnet, daß als Sonden Temperatursonden verwendet werden.

4. Verfahren nach den Ansprüchen 1 bis 3, dadurch gekennzeichnet, daß die auf der Oberfläche des beweglichen Rührers angeordneten Sonden gegenüber dem gut wärmeleitenden beweglichen Rührer dadurch thermisch isoliert werden, daß man diese im Kunststoffbüchsen einbettet, wobei der verwendete Kunststoff weniger als 1 % der Wärmeleitfähigkeit des die Rührerwendel bildenden Stahls aufweist.

5. Verfahren nach den Ansprüchen 1 bis 4, dadurch gekennzeichnet, daß als beweglicher Rührer ein freitragender Wendelrührer verwendet wird.

6. Verfahren nach dem Anspruch 5, dadurch gekennzeichnet, daß die in dem Sensorsignalverstärker eintreffenden Meßdaten über ein Koaxialkabel an eine gekapselte Rotorantenne gesendet werden, von wo sie dann durch berührungslose, induktive Signalübertragung auf eine gekapselte Statorantenne übertragen werden, die sich in einem zentralen Tauchrohr im Zentrum des freitragenden Wendelrührers befindet und wobei die Meßdaten anschließend von der gekapselten Statorantenne über ein weiteres Koaxialkabel an das elektronische Auswertegerät weitergeleitet werden.

7. Verfahren nach Anspruch 6, dadurch gekennzeichnet, daß gleichzeitig die zur Parametermessung benötigte Spannungsversorgung über die gekapselten Rotor- und Statorantennen ebenfalls induktiv erfolgt.

8. Verfahren nach den Ansprüchen 1 bis 7, dadurch gekennzeichnet, daß die Reaktoren bei einem Druckbereich von 0 bis 100 bar und bei einem Temperaturbereich von -40 bis +150°C betrieben werden.

9. Verfahren nach Anspruch 8, dadurch gekennzeichnet, daß es sich bei den Reaktoren um Polymerisationsreaktoren handelt, die bei einem Druckbereich von 10 bis 50 bar und bei einem Temperaturbereich von 40 bis +150°C betrieben werden.

10. Vorrichtung zur Bestimmung von Parametern bei Reaktoren mit beweglichen Rührern, welche im Reaktorinnern Sonden enthalten, wobei an der Oberfläche der beweglichen Rührer mindestens zwei Sonden angebracht sind, welche durch Anschlußkabel, die sich im beweglichen Rührer befinden, mit einem Sensorsignalverstärker verbunden sind, welcher wiederum über einen kontaktlosen Sensorabgriff mit einem elektronischen Auswertegerät zusammengeschaltet ist.

11. Vorrichtung nach Anspruch 10, wobei auf der Oberfläche des beweglichen Rührers Temperatursonden angebracht sind.

12. Vorrichtung nach Anspruch 10, wobei auf der Oberfläche des beweglichen Rührers Drucksonden angebracht sind.
